Europäisches Patentamt

European Patent Office

Office européen des brevets

(19)

(11) Numéro de publication: **0 228 921**
**B1**

(12) **FASCICULE DE BREVET EUROPEEN**

(45) Date de publication du fascicule du brevet: **23.05.90**

(21) Numéro de dépôt: **86402291.8**

(22) Date de dépôt: **15.10.86**

(51) Int. Cl.⁵: **B 23 K 35/36,** B 23 K 20/16, B 22 F 1/00

(54) **Procédé d'assemblage et de liaison par diffusion de pièces et de poudres en alliages métalliques.**

(30) Priorité: **18.10.85 FR 8515926**

(43) Date de publication de la demande:
**15.07.87 Bulletin 87/29**

(45) Mention de la délivrance du brevet:
**23.05.90 Bulletin 90/21**

(84) Etats contractants désignés:
**BE DE FR GB NL**

(56) Documents cités:
**FR-A-2 380 354**
**FR-A-2 455 944**
**GB-A- 909 314**
**GB-A-2 081 155**
**US-A-3 753 794**
**US-A-4 235 649**

**CHEMICAL ABSTRACTS, vol. 102, no. 18, 6 mai
1985, page 246, résumé no. 153248m,
Columbus, Ohio, US; N.N. DOROZHKIN et al.:
"Formation of self-lubricating coatings from
metal powders by activated sintering", &
TRENIE IZNOS 1985, (6)1,12-19**

(73) Titulaire: **SOCIETE NATIONALE D'ETUDE ET DE
CONSTRUCTION DE MOTEURS D'AVIATION,
"S.N.E.C.M.A."
2, boulevard du Général Martial Valin
F-75015 Paris (FR)**

(73) Titulaire: **ASSOCIATION POUR LA RECHERCHE
ET LE DEVELOPPEMENT DES METHODES ET
PROCESSUS INDUSTRIELS (ARMINES)
60, Boulevard Saint-Michel
F-75272 Paris Cédex 06 (FR)**

(72) Inventeur: **Bienvenu, Yves Charles
13, Parc Elisabeth
F-91000 Evry (FR)**
Inventeur: **Massart, Thierry Jean Marie Edouard
4, Clos de Mérival
B-1490 Court Saint Etienne (BE)**

(74) Mandataire: **Moinat, François
S.N.E.C.M.A. Service des Brevets Boîte Postale
81
F-91003 Evry Cédex (FR)**

# EP 0 228 921 B1

**Description**

La présente invention concerne un procédé d'assemblage et liaison par diffusion de corps en alliages métalliques. Elle vise les procédés du genre comportant une séquence d'activation et une séquence de mise sous pression à chaud qui provoque une liaison par interdiffusion solide.

Les alliages métalliques dont la liaison peut être obtenue par ces procédés sont des alliages du genre résistant à chaud ou à la corrosion comprenant, en proportions pondérales, au moins 50% d'un métal du groupe du nickel, du cobalt et du fer ou d'un alliage d'au moins deux de ces métaux. Notamment, certains de ces alliages sont désignés par le terme "superalliages" et dans ce cas dans leur composition, le reste est contitué par des éléments tels que le chrome, l'aluminium, le molybdène, le titane, le tungstène, le niobium, etc. . . qui entrent en solution solide et forment des composés intermétalliques ou forment avec du carbone des phases dispersées améliorant les caractéristiques fonctionnelles (mécaniques et de résistance à la corrosion) aux températures élevées. Ces alliages sont notamment utilisées dans la construction de turbomachines.

Par "corps," on extend ci-dessus et dans la suite, à la fois et indifféremment, soit des pièces massives de forme et de dimensions déterminées, par exemple destinées à constituer un assemblage soudé, soit les grains des poudres destinées à la réalisation de pièces par frittage ou compaction à chaud. En fait, les liaisons envisagées par l'invention concernent à la fois, soit deux pièces massives entre elles, soit une pièce massive et une poudre, soit des poudres et, dans la liaison de deux pièces massives entre elles, l'invention s'applique qu'il y ait ou non présence d'un élément d'appoort extérieur et procédé d'assemblage et liaison concerné englobe donc les différents procédés d'assemblage et liaison soit par soudage-diffusion, soit par brasage-diffusion soit par frittage ou compaction à chaud. On rappellera brièvement les principes de ces procédés généralement connus de l'homme du métier.

Le procédé de soudage-diffusion est un soudage en phase solide dans lequel les pièces sont maintenues en contact sous une pression donnée et portées à une température définie, inférieure à la température de fusion commençante, pendant un temps déterminé. Ces conditions opératoires conduisent à des déformations plastiques locales des surfaces de contact, ce qui entraîne un contact intime de celles-ci rendant ainsi possible la migration des atomes entre éléments et/ou une recristallisation à l'interface. Dans le cas idéal, une fois l'opération terminée rien ne permet de distinguer l'interface initiale de contact, que ce soit sous l'aspect micrographique, chimique ou mécanique.

Quant au brasage-diffusion, il consiste à insérer entre les deux pièces à assembler une couche mince (feuillard ou poudre) d'un alliage notamment à base de nickel comportant des additions (fondants) telles que la température de liquidus dudit alliage soit inférieure à la température de début de fusion du superalliage. Le chauffage provoque d'abord la fusion de cette couche et sa liaison avec les couches superficielles de contact des pièces, puis l'abaissement de la teneur locale du ou desdits fondants par migration dans les régions avoisinantes des pièces. En fait, il ne s'agit pas là d'un procédé de soudage par interdiffusion solide mais de l'application d'une technique connue mettant en oeuvre un brasage puis la diffusion des fondants de la brasure pour élever la température de fusion de la couche de liaison.

Le frittage s'est également révélé intéressant pour l'élaboration de pièces à partir de superalliages, étant donné les difficultés recontrées lors de l'utilisation de procédés conventionnels tels que l'usinage ou le forgeage. Le frittage permet la réalisation de pièces de formes complexes à partir d'une poudre de superalliage qui, après avoir été mise en forme, est soumise à l'opération de frittage proprement dite. Celle-ci consiste soit à chauffer les poudres à une température déterminée après les avoir compactées à froid en matrice, soit à mettre les poudres sous pression à une température déterminée et inférieure à la température de fusion commençante; ceci permet d'opbtenir une consolidation de la pièce par un phénomène analogue au soudage par diffusion au niveau de chaque grain. Les propriétés physiques et méchaniques des pièces frittées dépendent évidemment de la qualité des liaisons formées entre les grains de poudre.

L'assemblage des crops peut être réalisé soit entre des matériaux semblables, soit entre matériaux différentes par leur composition ou leur nature: un matériau dense et un matériau à l'état de poudre par exemple.

Les caractéristiques mécaniques élevées des alliages utilisés, s'accompagnent en revanche de difficultés de mise en oeuvre lors de la fabrication de pièces ou d'ensembles, en particulier par frittage ou soudage par diffusion.

Il est en effet apparu lors des essais de tenue mécanique d'assemblages de pièces en alliages soudées par diffusion, et d'examens micrographiques, que pour certaines nuances de superalliage ou pour certains alliages spéciaux du genre inoxydable, la liaison obtenue après soudage par diffusion était de qualité médiocre; de même la résistance des pièces frittées réalisées avec ces superalliages était faible, la cóhesion de l'ensemble étant bien inférieure aux valeurs habituellement obtenues. Dans certains cas même, aucune liaison n'était possible.

Les observations au microscope électronique et l'étude des constituants par microanalyse ont permis de mettre en évidence que ces défauts étaient dus à la formation dans les couches superficielles en contact de ségrégations ou précipités pouvant gêner et même interdire la diffusion. Ces ségrégations ou précipités résultent de la migration de certains constituants lors de la montée en température précédant l'opération qui réalise la liaison.

2

Ce phénomène de formation d'une barrière de diffusion est plus particulièrement flagrant pour les superalliages contenant, outre une teneur non négligeable en carbone, une teneur relativement élevée en titane, par example à partir de 0,15% de carbone et 1,5% de titane. On constate dans ce cas, après soudage par diffusion, par exemple, d'une part la présence dans l'interface d'un liseré quasi continu formé par une ségrégation de composés de titane comprenant surtout due carbure de titane et, d'autre part, l'absence de recristallisation. La figure la montre une microphotographie, obtenue à un grandissement de 2500 fois, d'un exemple d'assemblage de pièces sur lequel les phénomènes notés ci-dessus peuvent être observés. Les essais mécaniques confirment que la liaison ainsi réalisée est défectueuse.

FR—A—2 380 354 propose dans le but de résoudre ces difficultés un traitement préparatoire avant l'opération de liaison, consistant en un traitement d'adoucissement par chauffage dans une enceinte où circule une atmosphère hydrohalogénée composée d'un mélange d'hydrogène et d'un halogénure d'hydrogène. FR 1 170 557 et FR 1 243 415 ont également précisé les conditions de réalisation de traitements en atmosphère fluorée obtenue en particulier à partir de fluorure de chrome et de fluorure d'ammonium disposés sous forme de cément dans l'enceinte de traitement maintenue sous atmosphère réductrice, par exemple d'hydrogène. L'utilisation d'atmosphères hydrogénées peut cependant amener certaines difficultés et contraintes particulières de mise en oeuvre.

Le procédé d'assemblage et liaison par diffusion de corps, sous forme de pièces massives ou de grains de poudre, du genre décrit ci-dessus et évitant les inconvénients précités est caractérisé en ce qu'il comporte un dépôt préalable en interface desdits corps d'un produit du genre $MBF_x$ où x est pris dans le groupe des valeurs 3 et 4 et où M désigne soit un radical du genre $NH_4$ susceptible de former à chaud un dégagement gazeux comme $NH_3$, soit un élément métallique hors du groupe 1, constituant ainsi un fluoborate déterminé ou encore désigné, lorsque x = 4, comme bore-tétrafluorure ou tétrafluoborate, suivi d'une séquence de traitement de décapage-activation par passage desdits corps à une température supérieure à la température de sublimation dudit produit pendant une durée d'au moins cinq minutes.

Ledit traitement permet d'obtenir un "adoucissement" des matériaux des corps à assembler par réaction du fluoborate avec eux de façon à éliminer sous forme de composés volatils les éléments qui ont tendance à constituer des obstacles à la formation d'une jonction saine. Il permet également d'obtenir une activation de la liaison par interdiffusion solide.

Une explication du phénomène et des résultats obtenus peut être recherchée en partie dans les réactions de nature chimique qui sont observées lors de la mise en oeuvre des procédés conformes à l'invention. Dans les conditions du traitement, on obtient ainsi une décomposition du produit utilisé $MBF_4$ selon la réaction chimique:

$$MBF_4 \rightarrow MF + BF_3$$

Lorsqu'un produit du genre $MBF_3$ est utilisé, la réaction devient:

$$MBF_3 \rightarrow M + BF_3$$

et dans les deux cas la réaction se poursuit par exemple dans l'hypothèse où du titane ou de l'aluminium indésirables forment obstacle à la liaison comme il est connu:

$$\text{d'une part, } BF_3 + Ti \rightarrow TiF_a + B$$

$$\text{d'autre part, } MF + Ti \rightarrow M + TiF_b$$

Les produits obtenus de type fluorures $TiF_a$ ou $TiF_b$ sont volatils et s'éliminent par conséquent. Les mêmes réactions sont observées pour l'aluminium. Selon l'invention, M représente un radical du genre $NH_4$ ou un métal. Lorsque M est un métal, il se dépose en interface des corps à assembler et s'associe à l'alliage considéré lors des séquences ultérieures de liaison par interdiffusion solide. Lorsque M est un radical du genre $NH_4$, il s'élimine également par dégragement gazeux, comme $NH_3$ par exemple.

Un dépôt de bore est obtenu en interface des corps à assembler et ce élément a un effet d'activation en vue de la réalisation de la liaison par une interdiffusion solide. En fait, dans le domaine des températures prévues pour la mise en oeuvre, une réaction observée donne également:

$$BF_3 \rightarrow BF_2 + F$$

On notera en conséquence qu'à la formulation préférée du produit utilisé $MBF_4$ peut également être substituée une formulation $MBF_3$ conduisant aux mêmes résultats par un dégagement gazeux de composition $BF_3$ ou $BF_2$, selon le domaine des températures.

Avantageusement, le produit utilisé de type fluoborate est déposé soit sous forme solide, soit sous forme de suspension, par exemple dans un alcool, soit sous forme dissoute. Dans ces derniers cas, en début de chauffage, une évaporation se produit, provoquant le dépôt du fluoborate et l'enchaînement des réactions notées ci-dessus.

Le procédé présente l'avantage important, par exemple par ses facilités de mise en oeuvre et son gain de productivité, de permettre d'obtenir au cours d'un cycle unique de traitement, à la fois, la préparation de surface des faces à assembler et au cours de l'opération d'assemblage-liaison, l'activatioon du procédé, tout en assurant ainsi l'excellente qualité de la liaison et du produit final obtenu.

D'autres caractéristiques et avantages de l'invention seront mieux compris à l'aide de la description ci-après de quelques exemples d'application du procédé d'assemblage et liaison par diffusion selon l'invention, en se référant aux dessins annexés dans lesquels:

la figure 1a déjà examinée montre un microphotographie, à un grandissement de 2500 fois d'une zone de liaison entre deux pièces dans un assemblage obtenu selon un procédé antérieur à l'invention,

la figure 1b montre une microphotographie à un grandissement de 2500 fois analogue à la figure 1a, d'une zone de liaison entre deux pièces dans un assemblage analogue à celui qui est représenté à la figure 1a mais obtenue par le procédé conforme à l'invention,

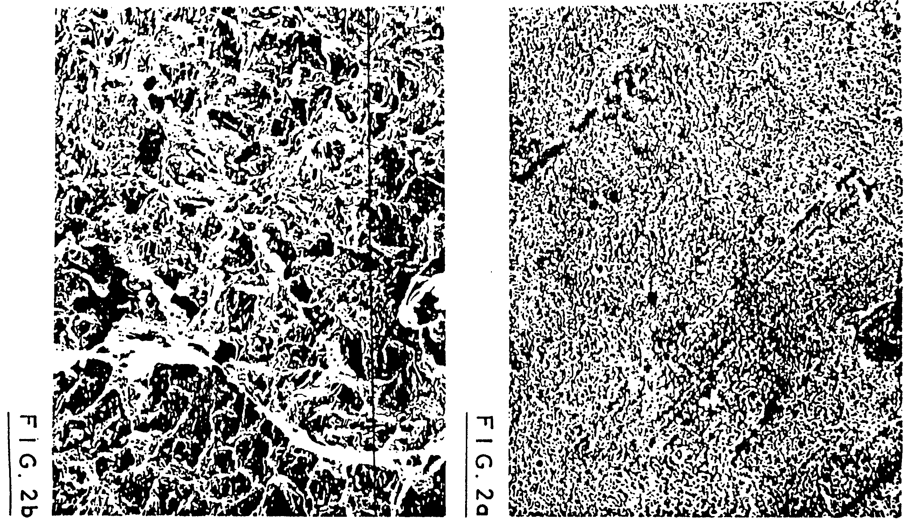

la figure 2a montre un aspect micrographique, à un grandissement de 650 fois, d'une face de rupture sur éprouvettes dont la liaison a été obtenue par un procédé antérieur à l'invention,

la figure 2b montre un aspect micrographique, à un grandissement de 650 fois, d'une face de rupture sur éprouvette, analogue à la figure 2a, mais dont la liaison a été obtenue par le procédé conforme à l'invention,

la figure 3a montre une microphotographie à un grandissement de 6000 fois d'une zone de liaison entre deux grains de poudre après une opération de compaction selon un procédé antérieur à l'invention,

la figure 3b montre une microphotographie, analogue à la figure 3a, à un grandissement de 6000 fois, également d'une zone de liaison entre deux grains de poudre, mais à la suite de l'application du procédé conforme à l'invention,

la figure 3c montre un aspect micrographique, à un grandissement de 25000 fois, d'une surface de grain de poudre à laquelle à été appliqué le procédé conforme à l'invention.

Pour décrire les modes de réalisation de l'invention, nous allons développer quelques exemples d'application du procédé d'assemblage et liaison par diffusion de corps, sous forme de pièces massives ou de grains de poudre, conforme à l'invention. En fait, le traitement de décapage-activation selon l'invention, dans toutes ses applications, s'intègre directement dans la gamme opératoire prévue dans la définition générale habituelle des procédés concernés pour lesquels quelques rappels ont été donnés précédemment.

## Exemple I

Procédé de soudage-diffusion

Plusieurs essais ont été réalisés en vue de la liaison par soudage-diffusion de pièces massives constituées chacune d'un alliage différent, par example NC10K15 (de désignation commercial IN100) et NK17CDAT (de désignation commerciale ASTROLOY) ou d'alliages de désignations commerciales CMS—X2 et ASTROLOY.

Dans chaque essai, une gamme opératoire comportant les séquences suivants a été suivie:

a) polissage mécanique des faces à assembler des pièces,

b) dégraissage des pièces,

c) application du produit $NH_4BF_4$, de type tétrafluoborate en interface des pièces,

d) traitement sous vide dans un four des éléments de l'assemblage comportant les sous-séquences suivantes:

d1) chauffage jusqu'à 500°C avec une montée en température de 10°C par minute, sans exercer de pression extérieure au niveau de l'assemblage,

d2) à partir de 500°C, mise sous pression de l'assemblage au moyen d'une vérin jusqu'à 20 bars et montée en température jusqu'à 950°C à 1200°C, la température étant déterminée en fonction des alliages en présence,

d3) maintien de la température et de la pression pendant deux à quatre heures,

d4) refroidissement sous vide pendant deux à quatre heures.

Les essais ont montré que de bons résultats sont obtenus en appliquant lors de la séquence c) des quantités de produit du type tétrafluoborate allant de 10 à 100 mg/cm².

On a procédé sur les pièces soudées à des essais méchaniques, à des examens micrographiques et à des analyses à la microsonde portant sur les zones de soudure.

En parallèle des essais comparatifs ont été menés sur des échantillons témoins de constitution indentique et assemblés dans les mêmes conditions de la gamme opératoire de soudage-diffusion en faisant abstraction de la séquence c) c'est-à-dire sans dépôt du produit de type tétrafluoborate en interface des pièces. Les résultats obtenus correspondant au procédé selon l'invention et à un procédé ne comportant pas les séquences propres à l'invention sont rassamblés dans le tableau ci-après.

# EP 0 228 921 B1

## Essais de flexion sur éprouvette soudée

|  | Charge appliquée en daN | Angle de flexion |
|---|---|---|
| Eprouvette A (procédé selon l'invention) | 161 | 86° |
| Eprouvette B (sans la séquence c de la gamme opératoire) | 152 | 74° |

On observe pour l'éprouvette A réalisée conformément à l'invention une rupture en-dehors de la zone de soudure alors que pour l'éprouvette B n'appliquant pas l'invention, la rupture se produit dans la zone de liaison.

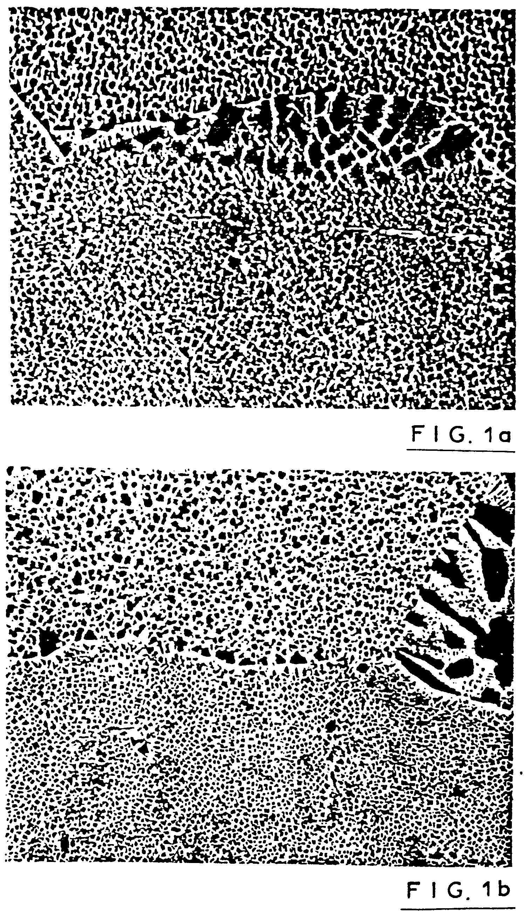

La figure 1a, déjà décrite ci-dessus, montre une microphotographie sur laquelle, en appliquant un procédé de soudage-diffusion sans traitement de décapage-activation par dépôt d'un produit de type tétrafluoborate, on observe un liseré dans la zone de soudure et un défaut de la jonction.

Sur la figure 1b analogue à la figure 1a, mais obtenue en appliquant un procédé de soudage-diffusion comportant un traitement de décapage-activation par dépôt d'un produit de type tétrafluoborate, on observe une junction totale entre les deux pièces et la disparition complète du liseré.

### Exemple II

Procédé de frittage de poudres

Dans les essais d'application du procédé selon l'invention aux opérations de frittage de poudres, une préparation préalable des poudres est effectuée, comportant, par exemple, les séquences suivantes:

a) immersion des poudres dans une suspension du produit de type tétrafluoborate dans un alcool,

b) séchage des poudres,

c) dépôt des poudres dans une matrice de forme.

Le découlé opératoire suit ensuite la gamme courante de réalisation de l'opération de frittage par pressage à chaud des poudres, mais commence cependant par une séquence de traitement de décapage-activation par chauffage jusqu'à 500°C avec une montée en température de 10°C per minute. Les mêmes observations que dans l'example précédent ont été faites en comparant les résultats des examens et des analyses selon que le traitement de décapage-activation selon l'invention est appliqué ou non.

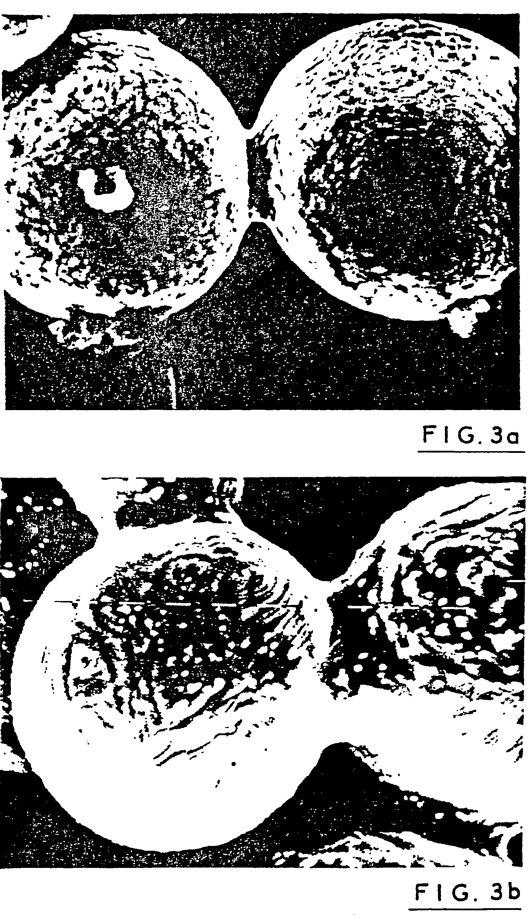

En comparant les figures 3a et 3b de microphotographies analogues, obtenues au même grandissement de 6000 fois, on note que lorsque le procédé conforme à l'invention est appliqué (figure 3b), la liaison entre deux grains de poudre est nettement améliorée et plus étendue.

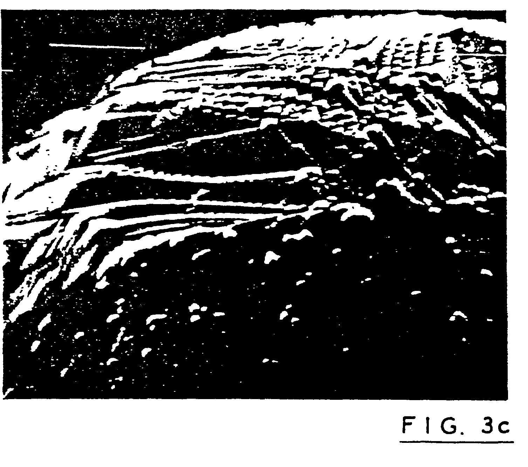

L'aspect micrographique observé sur la microphotographie de la figure 3c met en évidence sur la surface d'un grain de poudre une microstructure caractéristique obtenue par application du procédé selon l'invention présentant des reliefs dus au développement au cours du traitement de décapage-activation de dégagements gazeux ou volatils. Au contraire, lorsque le procédé conforme à l'invention n'est pas appliqué, seules des surfaces unies sans reliefs géométriques peuvent être observées (voir la figure 3a).

### Exemple III

Procédé de compaction isostatique à chaud de poudres

Comme dans l'exemple II précédent, une préparation préalable des poudres est effectuée avec l'application du proudit de type tétrafluoborate. La gamme courante d'application de ce procédé comporte, avant mise des poudres en conteneur, un traitement de dégazage. Dans le procédé selon l'invention, ce traitement de dégazage comporte une séquence de traitement de décapage-activation par chauffage

5

jusqu'à 500°C avec une montée en température de 10°C par minute suivi d'une mise en contenuer sans remise à l'air. La même amélioration des résultats que dans les exemples précédents a également été constatée en appliquant le procédé selon l'invention à la compaction isostatique à chaud des poudres.

Exemple IV

Procédé de brasage-diffusion

L'application de l'invention consiste dans ce cas à associer le produit de type tétrafluoborate à la brasure qui est insérée entre les pièces massives à assembler et à prévoir dans le cycle de montée en température au four un chauffage jusqu'à 500°C à la vitesse de 10°C par minute suivi de l'application de la pression d'accostage à partir de 500°C.

Cette application conduit à nouveau à une amélioration des résultats obtenus.

Des opérations de traitement au four sous vide onte été mentionnées ci-dessus dans les exemples décrits, mais il va de soi que selon les applications envisagées, ces traitements peuvent également être effectués dans une enceinte sous atmosphère neutre, dans le cadre de l'invention.

Le procédé selon l'invention comporte également des applications dérivées de la combinaison de certains des exemples décrits. Par exemple, une opération de densification de poudre par pressage à chaud peut être associée à un soudage-diffusion réalisant la liaison avec une pièce massive, le traitement de décapage-activation par un produit de type tétrafluoborate venant également dans cette application s'insérer dans la gamme opératoire.

En fonction des résultats des essais décrits ci-dessus (exemples I à III), les paramètres de l'opération peuvent être ajustés.

Notamment, la durée du passage entre 250°C et 500°C dans la séquence de traitement de décapage-activation peut varier de quinze à trente minutes.

Dans certaines applications, il peut être avantageux de choisir un produit $MBF_x$ où M est le métal de base d'au moins un desdits corps à assembler.

**Revendications**

1. Procédé d'assemblage et liaison par diffusion de corps, sous forme de pièces massives ou de grains de poudre, en alliages métalliques du genre comprenant en proportions pondérales au moins 50% d'un métal du groupe du nickel, du cobalt et du fer, ou d'un alliage d'au moins deux de ces métaux comportant au moins une étape de préparation et d'activation des surfaces à assembler et une étape de mise sous pression à chaud qui provoque une liaison par interdiffusion solide, caractérisé en ce que ladite étape de préparation comporte un dépôt préalable en interface desdits corps d'un produit du genre $MBF_x$, où x est pris dans le groupe des valeurs 3 et 4 et où M désigne soit un radical du genre $NH_4$ susceptible de former à chaud un dégagement gazeux comme $NH_3$, soit un élément métallique hors du groupe 1, constituant ainsi un fluoborate déterminé ou encore désigné, lorsque x = 4, comme bore-tétrafluorure ou tétrafluoborate, suivi d'une séquence de traitement de décapage-activation par passage desdits corps à une température supérieure à la température de sublimation dudit produit, pendant une durée d'au moins cinq minutes.

2. Procédé d'assemblage et liaison par diffusion selon la revendication 1, caractérisé en ce que le produit du genre $MBF_x$ utilisié est un tétrafluoborate d'ammonium de formule chimique $NF_4 BF_4$.

3. Procédé d'assemblage et liaison par diffusion selon la revendication 2, caractérisé en ce que la séquence de traitement de décapage-activation comporte un passage entre 250°C à 500°C pendant une durée de quinze à trente minutes.

4. Procédé d'assemblage et liaison par diffusion selon la revendication 1, caractérisé en ce que dans le produit due genre $MBF_x$ utilisé, M désigne un élément métallique qui est le métal de base d'au moins un desdits corps à assembler.

5. Procédé d'assemblage et liaison par diffusion selon l'une quelconque des revendications précédentes, caractérisé en ce que le fluoborate $MBF_x$ appliqué est déposé sous forme solide en interface des corps à assembler.

6. Procédé d'assemblage et liaison par diffusion selon l'une quelconque des revendications 1 à 4, caractérisé en ce que le fluoborate $MBF_x$ est déposé en interface des corps à assembler par application d'une suspension dudit fluoborate dans un alcool.

7. Procédé d'assemblage et liaison par diffusion selon l'une quelconque des revendications 1 à 4, caractérisé en ce que le fluoborate $MBF_x$ est appliqué en interface des corps à assembler sous forme dissoute.

8. Procédé d'assemblage et liaison par diffusion selon l'une quelconque des revendications 1 à 6, caractérisé en ce qu'il comporte les séquences suivantes:

a) polissage mécanique des faces à assembler de deux pièces massives,

b) dégraissage des pièces,

c) application dudit produit à base de fluoborate $MBF_x$ en interface,

d) traitement sous vide dans un four des éléments dudit assemblage comportant les sous-séquences suivantes:

d1) chauffage jusqu'à 500°C avec une montée en température de 10°C par minute, sans exercer de pression extérieure au niveau de l'assemblage,

6

d2) à partir de 500°C, mise sous pression de l'assemblage au moyen d'un vérin jusqu'à 20 bars et montée en température jusqu'à 905°C à 1200°C, la température étant déterminée en fonction des alliages en présence,

d3) maintien de la température et de la pression pendant deux à quatre heures,

d4) refroidissement sous vide pendant deux à quatre heures, de manière à réaliser entre les deux pièces une liaison de soudage par interdiffusion solide.

9. Procédé d'assemblage et liaison par diffusion selon l'une quelconque des revendications 1 à 4, 6 et 7, caractérisé en ce qu'il comporte les séquences suivantes:

a) immersion des poudres dans une suspension dudit fluoborate MBF$_x$ dans un alcool,

b) séchage des poudres,

c) dépôt des poudres dans une matrice de forme,

d) traitement par chauffage jusqu'à 500°C avec une montée en température de 10°C par minute,

e) opération de frittage comportant un pressage à chaud des poudres,

de manière à réaliser une pièce de forme dont la densification est obtenue par frittage.

10. Procédé d'assemblage et liaison par diffusion selon l'une quelconque des revendications 1 à 4, 6 et 7, caractérisé en ce qu'il comporte les séquence suivantes:

a) préparation des poudres avec dépôt en surface d'un produit de type fluoborate MBF$_x$

b) traitement de dégazage comportant une séquence initiale de chauffage jusqu'à 500°C avec une montée de 10°C par minute,

c) dépôt des poudres dans un conteneur

d) traitement de compaction par compression isostatique à chaud.

11. Procédé d'assemblage et liaison par diffusion selon l'une quelconque des revendications 1 à 6, 8 et 9, caractérisé en ce qu'une pièce massive est appliquée sur la poudre avant les séquences de traitement de manière à réaliser une séquence de densification de la poudre par pressage à chaud associée à un soudage-diffusion entre la pièce massive et la pièce obtenue à partir de la poudre.

12. Procédé d'assemblage et liaison par diffusion selon la revendication 1 à 6, caractérisé en ce que dans une opération de brasage-diffusion, la brasure insérée entre les pièces massives à assembler est associée audit produit du type fluoborate MBF$_x$ et le cycle de montée en température comporte un chauffage jusqu'à 500°C à la vitesse de 10°C par minute et l'appalication de la pression d'accostage à partir de 500°C.

## Patentansprüche

1. Verfahren zum Diffusionsverbinden von in der Form von massiven Stücken oder Pulverteilchen vorliegenden Körpern, die aus Metallmischungen mit wenigstens 50%, bezogen auf das Gewicht, an einem Metall der Gruppe Nickel, Cobalt und Eisen oder einem Gemenge von wenigstens zwei dieser Metalle bestehen, mit wenigstens einer Fertigungs- und Aktivierungsstufe der zu verbindenen Flächen und einer Wärmeverpressungsstufe zur Erzielung einer dauerhaften Verbindung miteinander, dadurch gekennzeichnet, daß die Fertigungstufe ein vorhergehendes Aufbringen eines Produkts der Formel MBF$_x$ auf die Grenzfläche de Körper beinhaltet, worin x ausgewählt ist aus den Werten 3 und 4 und M entweder ein Radikal in der Art von NH$_4$ ist, das sich zur Bildung eines gasförmigen Zersetzungsprodukts, wie NH$_3$ eignet, oder ein metallisches Element außerhalb der 1. Gruppe ist, das auch ein bestimmtes oder noch kenntlich gemachtes Fluoroborat bildet, das z.B. im Falle von x=4 ein Bortetrafluorid oder Tetrafluoroborat ist, und dann eine Behandlungsstufe mit einer Beiz-Aktivierung durch Passage der Körper während mindestens 5 Minuten bei einer oberhalb der Sublimationstemperatur des Produkts liegenden Temperatur folgt.

2. Verfahren zum Diffusionsverbinden gemäß Anspruch 1, dadurch gekennzeichnet, daß das Produkt vom Type MBF$_x$ Ammoniumtetrafluoroborat der chemischen Formel NH$_4$BF$_4$ ist.

3. Verfahren zum Diffusionsverbinden gemäß Anspruch 2, dadurch gekennzeichnet, daß die Behandlungsstufe der Beiz-Aktivierung eine Passage während einer Dauer von 15 bis 30 Minuten bei einer Temperatur zwischen 250 und 500°C umfaßt.

4. Verfahren zum Diffusionsverbinden gemäß Anspruch 1, dadurch gekennzeichnet, daß das Produkt vom Type MBF$_x$ ein solches ist, in dem M ein metallisches Element darstellt, welches ein Basismaterial wenigstens eines der zu verbindenden Körper ist.

5. Verfahren zum Diffusionsverbinden gemäß eine jeden der vorangehenden Ansprüche, dadurch gekennzeichnet, daß das angewendete Fluoroborat MBF$_x$ auf dei Grenzflächen der zu verbindenen Körper in fester Form aufgebracht wird.

6. Verfahren zum Diffusionsverbinden gemäß einem der Ansprüche 1 bis 4, dadurch gekennzeichnet, daß das angewendete Fluoroborat auf die Grenzflächen der zu verbindenden Körper unter Einsatz einer Suspension des Fluoroborats in einem Alkohol aufgebracht wird.

7. Verfahren zum Diffusionsverbinden gemäß einem der Ansprüche 1 bis 4, dadurch gekennzeichnet, daß das Fluoroborat auf die Grenzflächen der zu verbindenden Körper in gelöster Form aufgebracht wird.

8. Verfahren zum Diffusionsverbinden gemäß einem der Ansprüche 1 bis 6, dadurch gekennzeichnet, daß die folgenden Schritte durchgeführt werden:

a) mechanisches Polieren der zu verbindenen Grenzflächen von zwei massiven Stücken,

b) Entfetten der Stücke,

c) Aufbringen des Produkts auf der Basis eines Fluoroborats $MBF_x$ auf die Grenzflächen,

d) Behandlen unter Vakuum in einem Ofen mit den Elementen der Vereinigung mit den folgenden Untermaßnahmen:

d1) Erhitzen bis auf 500°C mit einem Anstieg von 10°C pro Minute ohne Anwendung eines äußeren Drucks auf das Verdbindungsniveau,

d2) ab 500°C Druckbehandlung mittels eines Zylinders bis auf 20 bar zur Vereinigung unter Anstieg der Temperatur bis zwischen 950 und 1200°C, wobei die Temperatur von den vorliegenden Metallmischungen abhängt,

d3) Aufrechterhalten der Temperatur und des Drucks während zwei bis vier Stunden,

d4) Abkühlen im Vakuum während zwei bis vier Stunden zwecks Gewinnung einer schweißartigen Verbindung durch eine Feststoff-Interdiffusion.

9. Verfahren zum Diffusionsverbinden gemäß einem der Ansprüche 1 bis 4 sowie 6 und 7, dadurch gekennzeichnet, daß es die folgenden Schritte umfaßt:

a) Eintauchen von Pulvern in eine Suspension des Fluoroborats $MBF_x$ in einen Alkohok,

b) Trocknen der Pulver,

c) Einbringen der Pulver in eine Formmatrize,

d) Behandeln durch Erhitzen bis auf 500°C bei einem Anstieg der Temperatur von 10°C pro Minute,

e) Sinterbehandlung mit Wärmepressung der Pulver zwecks Gewinnung eines Formstücks, dessen Verdichtung durch Sintern erhalten wird.

10. Verfahren zum Diffusionsverbinden gemäß einem der Ansprüche 1 bis 4 sowie 6 und 7, dadurch gekennzeichnet, daß des die folgenden Schritte umfaßt:

a) Herstellung von Pulvern mit einer Ansatzschicht von einem Produkt vom Typ eines Fluoroborats $MBF_x$ auf der Oberfläche,

b) Entgasungsbehandlung, bestehend aus einem Anfangserhitzen bis auf 500°C bei einem Anstieg von 10°C pro Minute,

c) Einbringen der Pulver in einen Behälter und

d) Verdichtungsbehandlung durch isostatischen Druck in der Wärme.

11. Verfahren zum Diffusionsverbinden gemäß einem der Ansprüche 1 bis 6 sowie 8 und 9, dadurch gekennzeichnet, daß ein massives Stück auf Pulver aufgebracht wird vor den Behandlungsschritten zwecks Verdichtung des Pulvers unter Druck und in der Wärme zum Erhalt einer Schweißverbindung von dem massiven Stück und dem aus dem Pulver erhalten Stück.

12. Verfahren zum Diffusionsverbinden gemäß einem der Ansprüche 1 bis 6, dadurch gekennzeichnet, daß während einer Lötdiffusion die Löstelle zwischen den zu verbindenen massiven Stücken mit einem Produkt von Type der Fluoroborate $MBF_x$ verbunden ist und der Zyklus des Wärmeanstiegs eine Aufheizung auf 500°C mit einer Geschwindigkeit von 10°C pro Minute und die Druckaufbringung ab 500°C aufweist.

## Claims

1. Process for the joining and bonding by diffusion welding of bodies in the form of solid components or grains of powder and in metal alloys of the type comprising in weighted proportions at least 50% of a metal in the group consisting of nickel, cobalt and iron, or an alloy of at least two of these metals comprising at least one stage of preparation and activation of the surfaces to be joined and a stage of subjection to heat and pressure to cause bonding by solid inter-diffusion, characterised in that the said preparation stage comprises the preliminary deposit at the interface between the two said bodies of a product of the type $MBF_x$, where x is taken from the group of values 3 and 4 and where M designates either a radical of the $NH_4$ type capable, when heated, of giving off a gas such as $NH_3$, or a metallic element outside group 1, thus constituting, when x = 4, a predetermined or designated fluoborate, like boron tetrafluoride or tetrafluoborate, followed by a sequence of pickling/activation by raising the said bodies, for a period of at least five minutes, to a temperature above that of the sublimation temperature of the said product.

2. Process for joining and bonding by diffusion in accordance with Claim 1, characterised in that the product of the $MBF_x$ type used is an ammonium tetrafluoborate with the chemical formula $NH_4BF_4$.

3. Process for joining and bonding by diffusion in accordance with Claim 2, characterised in that the sequence of pickling/activation treatment comprises a period at between 250°C and 500°C for a period of fifteen to thirty minutes.

4. Process for joining and bonding by diffusion in accordance with Claim 1, characterised in that the product of the $MBF_x$ type used, M designates a metallic element which is the base metal of at least one of the said bodies to be joined.

5. Process for joining and bonding by diffusion in accordance with any of the preceding Claims, characterised in that the fluoborate $MBF_x$ applied is deposited in solid form at the interface of the bodies to be joined.

6. Process for joining and bonding by diffusion in accordance with any of the Claims 1 to 4, characterised in that the fluoborate $MBF_x$ is desposited at the interface of the bodies to be joined by the application of a suspension in alcohol of the said fluoborate.

7. Process for joining and bonding by diffusion in accordance with any of the Claims 1 to 4, characterised in that the fluoborate $MBF_x$ is deposited at the interface of the bodies to be joined in a dissolved form.

8. Process for joining and bonding by diffusion in accordance with any of the Claims 1 to 6, characterised in that it comprises the following sequences:

a) mechanical polishing of the surfaces to be joined of the solid components,

b) degreasing of the components,

c) application of the interface of the said product with a fluoborate base $MBF_x$,

d) treatment under vacuum in an autoclave of the elements of the said assembly, comprising the following sub-sequences:

d1) heating to 500°C at a rate of rise of 10°C per minute, without the exercise of outside pressure on the assembly,

d2) above 500°C, exercise of a pressure on the assembly of up to 20 bars by means of a ram or jack and a rise in temperature to 950°C to 1200°C, the temperature being determined by the alloys present,

d3) maintenance of the temperature and pressure for two to four hours,

d4) cooling under vacuum for two to four hours, so as to achieve between the two components a welded join by solid inter-diffusion.

9. Process for joining and bonding by diffusion in accordance with any of the Claims 1 to 4, 6 and 7, characterised in that it comprises the following sequences:

a) immersion of the powder in a suspension in alcohol of the said fluoborate $MBF_x$,

b) drying of the powder,

c) deposit of the powder in a shaped die,

d) treatment by heating to 500°C at a rate of rise in temperature of 10°C per minute,

e) sintering operation comprising hot pressing the powder,

so as to produce a shaped component of which the densification has been obtained by sintering.

10. Process for joining and bonding by diffusion in accordance with any of the Claims 1 to 4, 6 and 7, characterised in that it comprises the following sequences:

a) preparation of the powder with the surface deposition of a product of the fluoborate $MBF_x$ type,

b) degasification treatment comprising an initial heating sequence up to 500°C at a rate of rise of 10°C per minute,

c) depositing the powder in a container,

d) compaction by isostatic pressure under heat.

11. Process for joining and bonding by diffusion in accordance with any of the Claims 1 to 6, 8 and 9, characterised in that a solid component is applied to the powder before the treatment sequences so as to achieve a sequence of densification of the powder by pressure under heat associated with a diffusion weld between the solid component and the component produced from the powder.

12. Process for joining and bonding by diffusion in accordance with any of the Claims 1 to 6, characterised in that in an operation of brazing diffusion, the brazing medium inserted bewteen the components to be joined is associated with the said product of fluoborate $MBF_x$ type and the cycle of temperature rise comprises heating at 500°C at the speed of 10°C per minute and the application of clamping pressure above 500°C.

F I G. 1a

F I G. 1b

F I G. 2a

F I G. 2b

FIG. 3a

FIG. 3b

F I G. 3c